# EUROPÄISCHE PATENTSCHRIFT

(11) **EP 0 565 771 B1**
(45) Veröffentlichungstag und Bekanntmachung des Hinweises auf die Patenterteilung: **03.01.1996**
(21) Anmeldenummer: 92117664.0
(22) Anmeldetag: 16.10.1992
(51) Int. Cl.: F16J 15/32

(54) **Radnabendichtung**
Hub seal
Joint de moyeu

(30) Priorität: 15.04.1992 DE 4212594
(43) Veröffentlichungstag der Anmeldung: 20.10.1993
(73) Patentinhaber: Firma Carl Freudenberg, D-69469 Weinheim (DE)
(72) Erfinder: Benzing, Rainer, W-8501 Schwarzenbruck (DE)

(56) Entgegenhaltungen:
- WO-A-87/00290
- US-A- 3 275 333
- PATENT ABSTRACTS OF JAPAN vol. 16, no. 103 (M-1221)13. März 1992 & JP-A-32 79 061 (NTN CORP) 10. Dezember 1991

## Beschreibung

Die Erfindung betrifft eine Radnabendichtung, umfassend einen an einer abzudichtenden Radnabe festlegbaren Haltering und einen daran befestigten Sensorring zur induktiven Erfassung von Drehbewegungen der Radnabe.

Derartig ausgebildete Radnabendichtungen sind allgemein bekannt. Sie bestehen zumeist aus einer Kassettendichtung mit integriertem Sensorring, wobei der Sensorring einen einstückigen Bestandteil der Kassettendichtung bildet. Der Sensorring wird durch Tiefziehen hergestellt, wodurch die maximal zulässigen Planschlagabweichungen nur schwer einzuhalten sind und separate Richtvorgänge erforderlich werden. Sowohl die Herstellbarkeit als auch die Gebrauchseigenschaften derartig ausgebildeter Radnabenabdichtungen sind wenig zufriedenstellend. Außerdem bedingt die einteilige Ausgestaltung von Sensorring und Haltering der Radnabendichtung gleiches Material. Im Hinblick auf einen guten Korrosionsschutz, der für den Sensorring benötigt wird, besteht das verwendete Material zumeist aus teurem und nichtrostendem Material das hohe Rückfederungsraten aufweist und für Tiefziehvorgänge wenig geeignet ist. Die bekannten Radnabendichtungen sind daher auch in wirtschaftlicher Hinsicht wenig befriedigend. Ein Radnabendichtung gemäß dem Oberbegriff des Anspruchs 1 ist auch aus der WO-A-87 00 290 bekannt. Bei dieser Radnabendichtung werden Sensorring und Haltering separat hergestellt und danach aneinander befestigt, zum Beispiel durch Punktschweißen. Somit können für Sensorring und Haltering jeweils geeignete Materialien zur Anwendung kommen. Dadurch, daß der Sensorring und der Haltering eine untrennbare Einheit bilden und die Lagerdichtung während ihrer Verwendung abrasivem Verschleiß unterliegt, kann bedarfsweise jedoch auch bei dieser Radnabendichtung nur die gesamte Einheit ausgetauscht werden.

Der Erfindung liegt die Aufgabe zugrunde, eine Radnabendichtung derart weiter zu entwickeln, daß die zulässigen Planschlagabweichungen mit geringem Fertigungsaufwand eingehalten werden können und daß die Herstellbarkeit bei größerer Wirtschaftlichkeit vereinfacht werden kann.

Diese Aufgabe wird erfindungsgemäß durch eine Radnabendichtung mit den Merkmalen von Anspruch 1 gelöst. Auf vorteilhafte Ausgestaltungen nehmen die abhängigen Ansprüche Bezug.

Bei der erfindungsgemäßen Radnabendichtung ist es vorgesehen, daß der Sensorring abnehmbar an dem Haltering befestigt ist und daß der Sensorring und der Haltering durch eine Zwischenschicht aus elastomerem Werkstoff voneinander getrennt sind. Hierbei ist von Vorteil, daß der Sensorring als plane Scheibe aus geeignetem Material separat hergestellt werden kann und nicht als Kassetten- oder Radialwellendichtring-Blech dient. Die geforderten zulässigen Planschlagabweichungen sind einfach einzuhalten und separate Richtvorgänge nicht erforderlich. Durch die abnehmbare Befestigung von Sensorring und Haltering ergeben sich bei guter wirtschaftlicher Herstellbarkeit der Radnabendichtung ausgezeichnete Gebrauchseigenschaften. Das zum Zweck des Korrosionsschutzes verwendete teure, nicht rostende Material für den Sensorring gelangt bei der erfindungsgemäßen Radnabendichtung nicht als Kassettenblech zur Anwendung, so daß für Haltering und Sensorring jeweils geeignete Materialien zur Anwendung gelangen. Unebenheiten auf der Oberfläche des Halteringes, die dem Sensorring zugewandt ist, können durch die elastische Zwischenschicht egalisiert werden. Desweiteren ist von Vorteil, daß die Zwischenschicht bedarfsweise eine Schwingungsisolierung auftretender Drehschwingungen bewirkt und dadurch eine zuverlässigere Messung der Geschwindigkeit des angrenzenden Fahrzeugrades ermöglicht.

Der Sensorring kann aus einer ebenen Scheibe bestehen, die an einer axialen Begrenzungsfläche der Zwischenschicht befestigt ist. Sensorringe aus ebenen Scheiben können in großen Stückzahlen einfach hergestellt werden, was in wirtschaftlicher Hinsicht von hervorzuhebender Bedeutung ist. Die maximal zulässigen Planschlagabweichungen sind ohne Nachbearbeitung der Scheiben einfach einzuhalten.

Die Scheibe kann mit dem Haltering vernietet oder verschraubt sein. Nach einer anderen Ausgestaltung ist es vorgesehen, daß die Scheibe mit zumindest einer Durchbrechung versehen und mit der Durchbrechung in eine sich quer zu der Dichtungsachse erstreckende Nut der Zwischenschicht einschnappbar ist. Bei lösbaren Verbindungen von Senorring und Haltering ergibt sich der Vorteil, daß im Reparatur- oder Servicefall der Sensorring von der zur Anwendung gelangenden Radialwellendichtring-Kassette gelöst und wieder verwendet werden kann. Die Reparatur- und Servicekosten werden dadurch erheblich reduziert, ohne daß Beeinträchtigungen der guten Gebrauchseigenschaften zu befürchten sind. In Abhängigkeit von den jeweiligen Gegebenheiten des Anwendungsfalles können die verschiedenartigsten, lösbaren Verbindungen vorgesehen sein. Ein in wirtschaftlicher Hinsicht besonders günstige Verbindung von Sensorring und Haltering ist gegeben, wenn der Sensorring mit einer Durchbrechung versehen und mit der Durchbrechung in eine sich quer zu der Dichtungsachse erstreckenden Nut der Zwischenschicht einschnappbar ist. Die Zwischenschicht aus elastomerem Werkstoff, die zwischen dem Haltering und dem Sensorring angeordnet ist, weist in diesem Falle beispielsweise zumindest einen einstückig angeformten Noppen auf, der die Durchbrechung durchgreift und den Sensorring im montierten Zustand in einer Nut aufnimmt.

Die Scheibe kann mit der Nut der Zwischenschicht verklebt sein. Die Montage der Radnabendichtung wird dadurch erheblich vereinfacht, da weniger separat zu befestigende Einzelteile zur Anwendung gelangen.

Die Scheibe kann den Haltering mit einem radial nach innen vorspringenden, kreisförmigen Teilbereich übergreifen, der von der abzudichtenden Achse nur durch einen Dichtspalt getrennt ist. Der Dichtspalt bedingt einen guten Schutz für die Dichtlippe der zur Anwendung gelangenden Dichtung vor Schmutz und anderen Umwelteinflüssen. Der Dichtspalt kann beispielsweise die Form eines Labyrinths aufweisen.

Die Funktion einer Vorschaltdichtung wird erfüllt, wenn der Teilbereich eine Dichtlippe aus polymerem Werkstoff trägt. Außerdem kann der Teilbereich eine Gegenfläche für eine Dichtlippe aus polymerem Werkstoff bilden. Dies ist insbesondere im Hinblick auf eine lange Dauerhaltbarkeit der beanspruchten Dichtung von Vorteil, da die Scheibe funktionsbedingt eine besonders ebene Oberfläche aufweisen muß. Der Verschleiß der Dichtlippe, die gegebenenfalls auf der Gegenfläche der Scheibe läuft, unterliegt dadurch nur außerordentlich geringem Verschleiß.

Nach einer anderen Ausgestaltung kann es vorgesehen sein, daß der Sensorring mit einem parallel zu der Dichtungsachse vorspringenden Kragen versehen ist und daß der Kragen die Zwischenschicht auf der von der Dichtungsachse abgewandten Seite umschließt. Der Kragen kann den Haltering mit einem radial nach innen vorspringenden Flansch auf der von dem Sensorring abgewandten Seite umgreifen. Auch diese Ausgestaltüng stellt eine lösbare Verbindung zwischen der Scheibe und dem Haltering dar und weist in axialer Richtung besonders kompakte Abmessungen auf.

Die erfindungsgemäße Radnabendichtung wird im folgenden anhand der als Anlage beigefügten Zeichnungen weiter verdeutlicht.

Figur 1 zeigt eine Radnabendichtung, wobei der Sensorring und der Haltering durch Nieten zusammengehalten sind.

In Figur 2 ist eine Radnabendichtung, ähnlich der Figur 1 dargestellt. Sensorring und Haltering sind durch eine Steckverbindung aneinander festgelegt.

Figur 3 zeigt eine Radnabendichtung gemäß Figur 2, wobei der Sensorring den Haltering mit einem radial nach innen vorspringenden Flansch umgreift und durch eine Einschnappverbindung an diesem festgelegt ist.

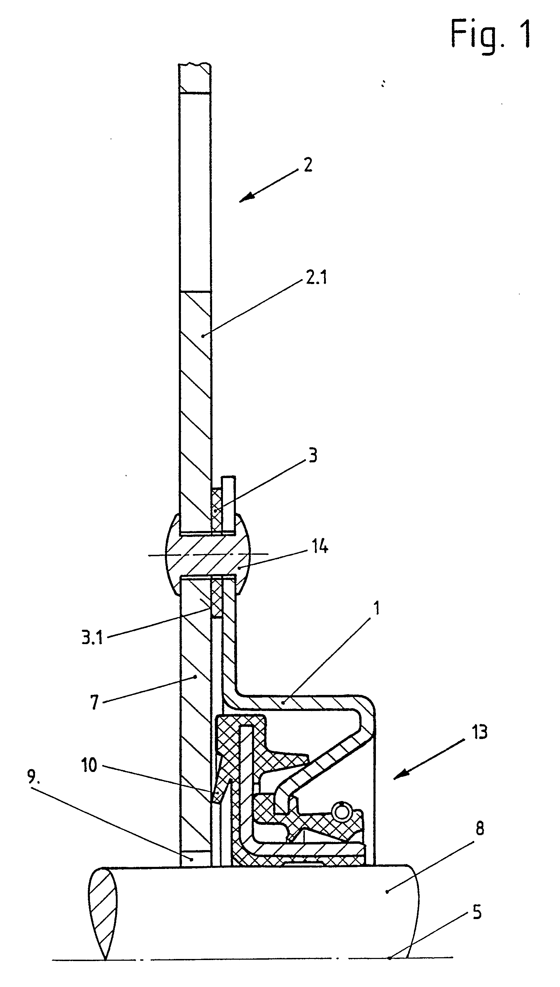

In den Figuren 1 bis 3 ist jeweils eine Radnabendichtung gezeigt, die einen an der Radnabe festlegbaren Haltering 1 und einen abnehmbar an dem Haltering 1 befestigten Sensorring 2 umfaßt. Der Sensorring 2 wird zur induktiven Erfassung von Drehbewegungen der Radnabe benötigt, beispielsweise im Rahmen einer ABS-Bremsanlage in Kraftfahrzeugen. Der Sensorring 2 ist in den Ausführungsbeispielen der Erfindung als plane Scheibe separat hergestellt und weist ohne nachträgliches Richten der Scheibe Planschlagabweichungen auf, die in jedem Fall innerhalb der zulässigen Toleranzgrenzen liegen. Der Sensorring 2 ist in diesen Ausführungsbeispielen derart am Haltering 1 festgelegt, daß er gleichzeitig den Zusammenhalt einer zur Anwendung gelangenden Kassettendichtung 13 bewirkt. Diese Ausgestaltung ermöglicht eine besonders einfache Montage der erfindungsgemäßen Radnabendichtung. Der Sensorring 2 und der Haltering 1 sind jeweils durch eine Zwischenschicht 3 aus elastomerem Werkstoff voneinander getrennt und berühren einander nicht direkt. Dadurch ist gewährleistet, daß fertigungstechnisch bedingte Oberflächenungenauigkeiten des Halteringes 1 keinen Einfluß auf die Lage des Sensorringes 2 haben. Oberflächenrauhigkeiten und/oder tiefziehbedingte Unebenheiten werden durch die Zwischenschicht 3 ausgeglichen.

Zur weiter vereinfachten Montage kann die Zwischenschicht 3 beispielsweise mit dem Sensorring 2 und/oder dem Haltering 1 verklebt sein. Der Sensorring 2 ist derart ausgebildet, daß er bis in unmittelbare Nähe der abzudichtenden Achse (8) geführt ist und mit dieser einen Dichtspalt (9) begrenzt. Der Dichtspalt (9) kann verschiedenartig ausgebildet sein und schützt die in axialer Richtung angrenzenden Dichtlippen (10) der Kassettendichtung 13 vor Beschädigungen infolge Verschmutzung. Der Sensorring 2 kann in diesem Teilbereich, der der Achse (8) benachbart zugeordnet ist, beispielsweise labyrinthartig ausgestaltet sein oder eine Dichtlippe aus elastomerem Werkstoff aufnehmen, die als Vorschaltdichtung fungiert.

Infolge der guten Oberflächenbeschaffenheit des Sensorringes 2 eignet sich dieser auch als Gegenfläche 7.1 für eine Dichtlippe 10 aus polymerem Werkstoff.

Die Radnabendichtung aus Figur 1 weist als Verbindungselement zwischen Sensorring 2 und Haltering 1 Nieten 14 auf, von denen mehrere entlang einer Umfangslinie angeordnet sind. Die Zwischenschicht 3 kann entweder am Haltering 1 oder am Sensorring 2 angeklebt oder lose zwischen diesen beiden Teilen angeordnet sein. Die Kassettendichtung 13, deren Versteifungsring einstückig mit dem Haltering 1 ausgebildet ist, liegt mit ihren Dichtlippen 10 einerseits am Sensorring 2 und andererseits an Gegenflächen der Kassettendichtung 13 an.

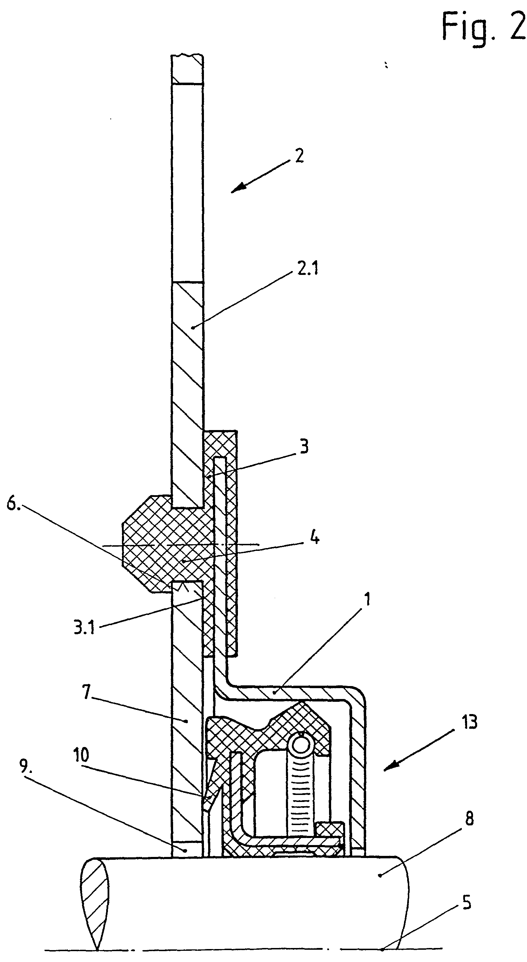

Die Radnabendichtung gemäß Figur 2 unterscheidet sich von der zuvor beschriebenen dadurch, daß die Scheibe 2.1, die den Sensorring 2 bildet, mit mehreren am Umfang angeordneten Durchbrechungen 4 versehen und mit den Durchbrechungen 4 in sich quer zu der Dichtungsachse 5 erstreckenden Nuten 6 der Zwischenschicht 3 eingeschnappt ist. In Abhängigkeit von den jeweiligen Gegebenheiten des Anwendungsfalles gelangen beispielsweise drei gleichmäßig am Umfang verteilte Durchbrechungen zur Anwendung. Im betriebsfertigen Zustand liegt der Sensorring 2 unter axialer Vorspannung, die durch die Zwischenschicht 3 erzeugt wird, in der Nut 6 an. In diesem Ausführungsbeispiel ist der Haltering 1 derart ausgebildet, daß die gesamte Dichtung topfartig umschlossen ist. In axialer Richtung ist die Dichtung einerseits durch einen Flanschvorsprung des Halteringes 1 geschützt, der sich bis unmittelbar an die Achse 8 erstreckt und in axialer Richtung andererseits durch den Teilbereich 7 des Sensorringes 2.

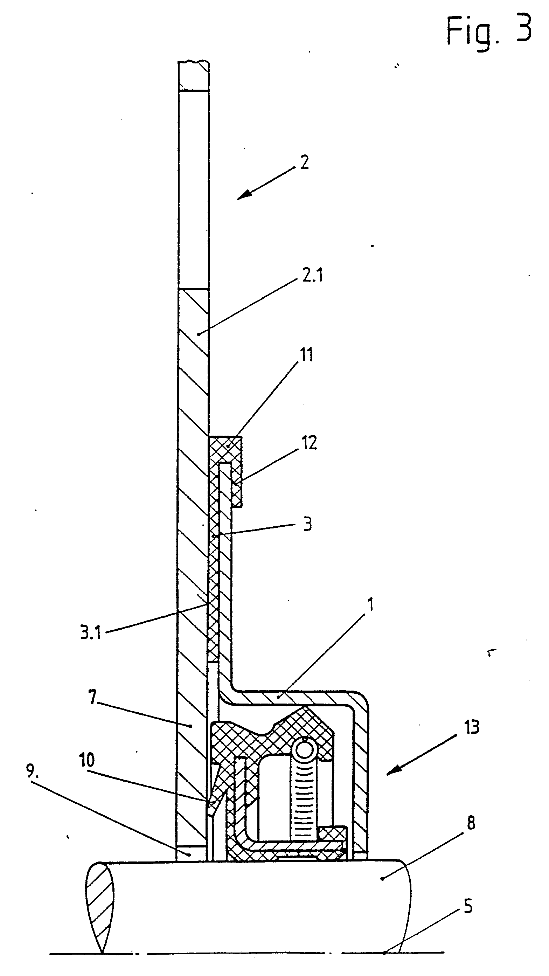

In Figur 3 ist an den Sensorring 2 die Zwischenschicht 3 unmittelbar anvulkanisiert. Die Zwischenschicht 3 weist einen parallel zu der Dichtungsachse 5 vorspringenden Kragen 11 und auf der dem Sensorring 2 in axialer Richtung abgewandten Seite einen radial nach innen vorspringenden Flansch 12 auf. Der Haltering 1 wird von dem Kragen 11 und dem Flansch 12 der Zwischenschicht 3 umgriffen. Sowohl die einfache Herstellung als au'ch die einfache Montage der Radnabendichtung aus diesem Ausführungsbeispiel sind von hervorzuhebender Bedeutung. Im Gegensatz zu dem Ausführungsbeispiel aus Figur 2 sind die Abmessungen der hier gezeigten Radnabendichtung in axialer Richtung kleiner. Im übrigen entspricht die Radnabendichtung gemäß Figur 3 im wesentlichen der Radnabendichtung aus Figur 2.

## Patentansprüche

1. Radnabendichtung, umfassend einen an einer abzudichtenden Radnabe festlegbaren Haltering (1) und einen daran befestigten Sensorring (2) zur induktiven Erfassung von Drehbewegungen der Radnabe, dadurch gekennzeichnet, daß der Sensorring (2) abnehmbar an dem Haltering (1) befestigt ist und daß der Sensorring (2) und der Haltering (1) durch eine Zwischenschicht aus elastomerem Werkstoff voneinander getrennt sind.

2. Radnabendichtung nach Anspruch 1, dadurch gekennzeichnet, daß der Sensorring (2) aus einer ebenen Scheibe (2.1) besteht, die an einer axialen Begrenzungsfläche (3.1) der Zwischenschicht (3) befestigt ist.

3. Radnabendichtung nach Anspruch 2, dadurch gekennzeichnet, daß die Scheibe (2.1) mit dem Haltering (1) vernietet oder verschraubt ist.

4. Radnabendichtung nach Anspruch 2, dadurch gekennzeichnet, daß die Scheibe (2.1) mit zumindest einer Durchbrechung (4) versehen und mit der Durchbrechung (4) in eine sich quer zur der Dichtungsachse (5) erstreckenden Nut (6) der Zwischenschicht (3) einschnappbar ist.

5. Radnabendichtung nach einem der Ansprüche 2 bis 4, dadurch gekennzeichnet, daß die Scheibe (2.1) mit der Zwischenschicht (3) verklebt ist.

6. Radnabendichtung nach einem der Ansprüche 2 bis 5, dadurch gekennzeichnet, daß die Scheibe (2.1) den Haltering (1) mit einem radial nach innen vorspringenden, kreisförmigen Teilbereich (7) übergreift und von der abzudichtenden Achse (8) nur durch einen Dichtspalt (9) getrennt ist.

7. Radnabendichtung nach Anspruch 6, dadurch gekennzeichnet, daß der Teilbereich (7) eine Dichtlippe (10) aus polymerem Werkstoff trägt oder eine Gegenfläche (7.1) für eine Dichtlippe (10) aus polymerem Werkstoff bildet.

8. Radnabendichtung nach Anspruch 1 und 2, dadurch gekennzeichnet, daß der Sensorring (2) mit einem parallel zu der Dichtungsachse (5) vorspringenden Kragen (11) versehen ist und daß der Kragen (11) die Zwischenschicht (3) auf der von der Dichtungsachse (5) abgewandten Seite umschließt.

9. Radnabendichtung nach Anspruch 8, dadurch gekennzeichnet, daß der Kragen (11) den Haltering (1) auf der von dem Sensorring (2) abgewandten Seite mit einem radial nach innen vorspringenden Flansch (12) anliegend umgreift.

## Claims

1. A hub seal, comprising a holding ring (1), which can be fixed on a wheel hub to be sealed off, and a sensor ring (2) which is attached to said holding ring for the inductive recording of rotary movements of the wheel hub, characterized in that the sensor ring (2) is attached to the holding ring (1) in a removable manner, and in that the sensor ring (2) and the holding ring (1) are separated from one another by an intermediate layer of elastomeric material.

2. A hub seal according to claim 1, characterized in that the sensor ring (2) comprises a flat disc (2.1) which is attached to an axial boundary surface (3.1) of the intermediate layer (3).

3. A hub seal according to claim 2, characterized in that the disc (2.1) is riveted or screwed to the holding ring (1).

4. A hub seal according to claim 1, characterized in that the disc (2.1) is provided with at least one opening (4) and, with the opening (4), can be snapped into a groove (6), extending transversely to the seal axis (5), in the intermediate layer (3).

5. A hub seal according to any one of claims 2 to 4, characterized in that the disc (2.1) is bonded to the intermediate layer (3).

6. A hub seal according to any one of claims 2 to 5, characterized in that the disc (2.1) engages over the holding ring (1) with a circular partial region (7) projecting radially inwards and is separated from the axle (8) to be sealed off only by a sealing gap (9).

7. A hub seal according to claim 6, characterized in that the partial region (7) bears a sealing lip (10) of polymeric material or forms a counter-surface (7.1) for a sealing lip (10) of polymeric material.

8. A hub seal according to either of claims 1 and 2, characterized in that the sensor ring (2) is provided with a collar (11) projecting parallel to the seal axis (5), and in that the collar (11) surrounds the intermediate layer (3) on the side facing away from the seal axis (5).

9. A hub seal according to claim 8, characterized in that the collar (11) engages around the holding ring (1) on the side facing away from the sensor ring (2), resting against it with a flange (12) projecting radially inwards.

## Revendications

1. Joint de moyeu, comprenant une bague de support (1) pouvant être fixée à un moyeu à rendre étanche et une bague à détecteur (2) fixée dessus destinée à la détection inductive des mouvements rotatifs du moyeu, caractérisé en ce que la bague à détecteur (2) est fixée de façon amovible à la bague de support (1) et en ce que la bague à détecteur (2) et la bague de support (1) sont séparées l'une de l'autre par une couche intermédiaire en matière élastomère.

2. Joint de moyeu selon la revendication 1, caractérisé en ce que la bague à détecteur (2) se compose d'un disque plan (2.1), qui est fixé à une périphérie (3.1) axiale de la couche intermédiaire (3).

3. Joint de moyeu selon la revendication 2, caractérisé en ce que le disque (2.1) ) est rivé ou vissé avec la bague de support (1).

4. Joint de moyeu selon la revendication 2, caractérisé en ce que le disque (2.1) est pourvu d'au moins une découpure (4) et peut s'encliqueter par la découpure (4) dans une rainure (6) de la couche intermédiaire (3) s'étendant transversalement à l'axe du joint (5).

5. Joint de moyeu selon l'une des revendications 2 à 4, caractérisé en ce que le disque (2.1) est collé avec la couche intermédiaire (3).

6. Joint de moyeu selon l'une des revendications 2 à 5, caractérisé en ce que le disque (2.1) recouvre la bague de support (1) par une zone partielle (7) circulaire, faisant saillie de façon radiale vers l'intérieur, et est séparé de l'axe à rendre étanche (8) uniquement par une fente d'étanchéité (9).

7. Joint de moyeu selon la revendication 6, caractérisé en ce que la zone partielle (7) porte une lèvre d'étanchéité (10) en matière polymère ou forme une contre-surface (7.1) pour une lèvre d'étanchéité (10) en matière polymère.

8. Joint de moyeu selon l'une des revendications 1 et 2, caractérisé en ce que la bague à détecteur (2) est pourvue d'un collet (11) faisant saillie parallèlement à l'axe du joint (5) et en ce que le collet (11) entoure la couche intermédiaire (3) sur le côté opposé à l'axe du joint (5).

9. Joint de moyeu selon la revendication 8, caractérisé en ce que le collet (11) recouvre de façon adjacente la bague de support (1) sur le côté opposé à la bague à détecteur (2) par une bride (12) faisant saillie de façon radiale vers l'intérieur.
